# EUROPEAN PATENT APPLICATION

(11) **EP 4 667 201 A1**
(43) Date of publication of application: **24.12.2025**
(21) Application number: 24183540.4
(22) Date of filing: 20.06.2024
(51) Int. Cl.: B29D 11/00, G02C 7/02

(54) **METHOD FOR MANUFACTURING AN OPTICAL ARTICLE WITH ENCAPSULATED MICROSTRUCTURES**

(71) Applicant: Essilor International, 94220 Charenton-Le-Pont (FR)
(72) Inventor: CHIU, Hao-Wen, 34685, FLORIDA (US); SHAN, Haifeng, 01545, SHREWSBURY (US)
(74) Representative: Plasseraud IP

(57) **Abstract**

Method for manufacturing an optical article with encapsulated microstructures (64) comprising the steps of:
- providing a covering layer (56) having microstructures (58) on the concave surface, the covering layer (56) comprising a first transparent thermoplastic material (52);
- depositing, on said micro-structured surface, a second transparent thermoplastic material (60) having a refractive index (RI_{Lens}) higher than a respective refractive index (RI_{Wafer}) of the first transparent thermoplastic material (52) and a glass transition temperature (Tg_{Lens}) equal to or lower than a respective glass transition temperature (Tg_{Wafer}) of the first transparent thermoplastic material (52), thus obtaining a support layer (62) which encapsulates the microstructures (58), the support layer (62) forming, together with said covering layer (56), said optical article with encapsulated microstructures (64).

## Description

### Technical field

This invention relates to a method for manufacturing an optical article with encapsulated microstructures, such as an ophthalmic lens, in particular for myopia control.

### Background information and prior art

Ophthalmic lenses with microstructures, commonly microlenses, placed on a front surface to provide peripheral defocus of light impinging the retina of an eye of an individual have been shown to effectively slow down the progression of myopia in kids and teens. However, the presence of microstructures on the lens surface presents a significant challenge in the overall manufacturing of the lens.

In the following of the description reference will be made to a "*lens*", however, other known optical articles having encapsulated microstructures on a surface such as wafers or films can be considered.

Injection molding methods for manufacturing lenses with microstructures are known. The injection molding methods typically comprise the injection of a first optical thermoplastic material into a mold to obtain an optical thermoplastic wafer layer TP_{Wafer} (also referred as cover layer) of uniform thickness and having microstructures on a surface.

The wafer layer TP_{Wafer} with microstructures can be produced by injection molding, roll-to-roll hot embossing or other means.

An encapsulation of the microstructures is then carried out by injecting, over the micro-structured surface of the wafer layer TP_{Wafer}, a different second optical thermoplastic material, to obtain a lens layer TP_{Lens} (also referred as body layer) forming the main body of the lens.

The resulting final lens is a two-layered composite lens having microstructures encapsulated at the interface between the wafer layer TP_{Wafer} and the lens layer TP_{Lens}.

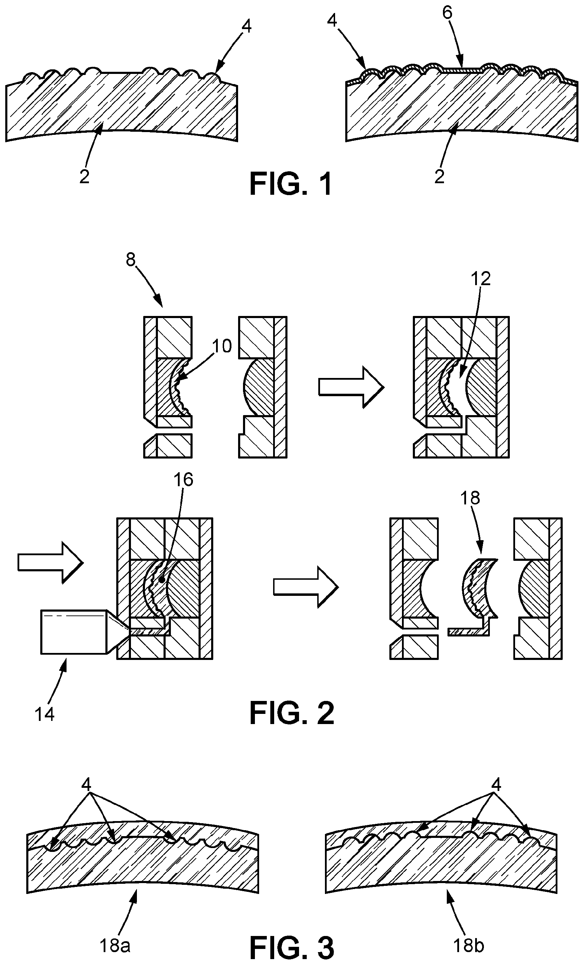

As shown in Figure 1, which depicts a section view of a lens 2 with microstructures 4, the geometric shape of the lens 2 is altered when a hard coating 6 is deposited on it to protect the lens 2 from scratches and other damages. The shape changes lead to a shift of the optical design of the lens 2. Several further design steps taking into consideration the coating process are typically needed to compensate such problem, and this is a time consuming and costly process. Moreover, the design compensation steps must be repeated for each different coating applied onto the lens 2.

Methods including lamination, overcasting, and injection overmolding are known to encapsulate the microstructures 4 inside the body of a lens to eliminate coating dependence while providing protection to the microstructures 4.

Figure 2 shows the steps of an injection overmolding process to encapsulate the microstructures 4 on the surface of the wafer layer TP_{Wafer} above disclosed.

In Figure 2 it is shown a top view of an open mold 8 wherein the wafer layer TP_{Wafer}, referenced 10 in Figure 2, such as a PC (polycarbonate) wafer, having the microstructures 4 on its concave surface, is inserted. Then, the mold 8 is closed leaving an open space 12 between the wafer layer TP_{Wafer} 10 and the mold 8. A hot melt of the second optical thermoplastic material, such as PMMA (polymethyl methacrylate), is injected into the open space 12 through a filler 14, thus creating the lens layer TP_{Lens}, referenced 16 in Figure 2. Finally, the mold 8 is opened, thus allowing obtaining a final lens 18 (a bi-layer made up of the wafer layer TP_{Wafer} 10 and the lens layer TP_{Lens} 16).

As above detailed, the injection overmolding process involves injecting a hot melt second optical thermoplastic material over the relatively cold micro-structured surface of the wafer layer TP_{Wafer}.

The microstructures 4 of the wafer layer TP_{Wafer} soften and deform under the high heat and pressure of the overmolding steps. This results in a loss of shape integrity of the microstructures 4 and in a worsening of the optical design of such microstructures 4, thus leading to a poor control of the progression of myopia.

Moreover, the first optical thermoplastic material and the second optical thermoplastic material need to be carefully selected in order to form a well-defined clear interface for good optical fidelity and lens clarity, and in order to achieve a strong bonding. The resulting final lens 18 should in fact pass subsequent known Rx processing steps without issues, therefore, the choice of the materials is particularly challenging. Very specific property relations between the two different thermoplastic materials are necessary.

Figure 3 shows a section view of two different types of final lens 18, a first final lens 18a having convex microstructures 4 and a second final lens 18b having concave microstructure 4. The encapsulated microstructures 4 must have predetermined optical powers to facilitate the peripheral defocus. To have the appropriate optical powers, it is required that a wafer layer refractive index RI_{Wafer} of the wafer layer TP_{Wafer} is different from a lens layer refractive index RI_{Lens} of the lens layer TP_{Lens}, i.e., the difference ΔRI of the two refractive index RI_{Wafer} and RI_{Lens} must be different from zero.

For myopia control, the microlens powers of the final lens 18 have to be positive to provide peripheral defocus that slows down the progression of the myopia. When ΔRI is greater than zero (i.e., RI_{Wafer} is greater than RI_{Lens}), the microstructures 4 on the wafer layer TP_{Wafer} have to be convex to have positive powers (first final lens 18a). When ΔRI is lower than 0 (i.e., RI_{Wafer} is lower than RI_{Lens}), the microstructures 4 on the wafer layer TP_{Wafer} have to be concave to have positive powers (second final lens 18b).

To maintain the shape integrity of the microstructures 4, the thermal resistance of the wafer layer TP_{Wafer} must be greater than the thermal resistance of the lens layer TP_{Lens}, to withstand the high heat and pressure of the injection overmolding process. For a thermoplastic material, its thermal resistance can be characterized by the glass transition temperature *Tg*: a higher glass transition temperature *Tg* corresponds to a greater heat resistance. Hence, the glass transition temperature *Tg_{Wafer}* of the wafer layer TP_{Wafer} has to be higher than the glass transition temperature *Tg_{Lens}* of the lens layer TP_{Lens} in order to prevent the microstructures 4 from deforming.

In general, a high index amorphous thermoplastic material has a great heat resistance owing inherently to the chemical structures. Therefore, a high glass transition temperature *Tg* corresponds to a high refractive index RI.

As the main body of the final lens 18 is formed by the lens layer TP_{Lens}, to reduce the overall thickness of the final lens 18 to be aesthetically pleasant and appealing to consumers, it would be preferable that the second optical thermoplastic material of the lens layer TP_{Lens} is a high index material having the lens layer refractive index RI_{Lens} higher than the wafer layer refractive index RI_{Wafer} of the wafer layer TP_{Wafer}. In such case the first optical thermoplastic material of the wafer layer TP_{Wafe} would be a low index material.

This would however imply, as above explained, that the second optical thermoplastic material of the lens layer TP_{Lens} has also a glass transition temperature *Tg_{Lens}* higher than the one of the first optical thermoplastic material of the wafer layer TP_{Wafer}.

On the other side, to preserve the shape integrity of the microstructures 4 of the wafer layer TP_{Wafer} during the subsequent injection overmolding of the second optical thermoplastic material, the heat resistance of the first optical thermoplastic material of the wafer layer TP_{Wafer} must be greater than the one of the second optical thermoplastic material being injected to encapsulate the microstructures 4.

Therefore, using a high index material as second optical thermoplastic material for the lens layer TP_{Lens} (which would be preferable to reduce the overall thickness of the final lens 18) would not work as the microstructures 4 created on the low index material of the wafer layer TP_{Wafer} would severely deform.

None of the prior art technologies provides a working solution to construct a composite lens with encapsulated microstructures wherein the lens layer TP_{Lens} is made up of a second optical thermoplastic material having a lens layer refractive index RI_{Lens} higher than the wafer layer refractive index RI_{Wafer} of the wafer layer TP_{Wafer} and wherein, at the same time, the microstructures 4 do not deform.

In fact, it is not available a thermoplastic material pair wherein the first optical thermoplastic material of the wafer layer TP_{Wafer} has a glass transition temperature *Tg_{Wafer}* higher than the one of the second optical thermoplastic material of the lens layer TP_{Lens} and, at the same time, a refractive index RI_{Wafer} lower than the one RI_{Lens} of the second optical thermoplastic material, such materials being further compatible with each other to construct a two-layered composite lens.

Accordingly, there is the need to provide an innovative method for manufacturing an optical article with encapsulated microstructures with a reduced overall thickness to be aesthetically pleasant and appealing to consumers and which, at the same time, maintains the shape integrity and the optical design of the microstructures it contains to better control the progression of myopia in an individual, thus overcoming the problems of the prior art.

### Summary

What is provided herein is a method for manufacturing an optical article with encapsulated microstructures comprising the steps of:
- providing a covering layer having microstructures on the concave surface, the covering layer comprising a first transparent thermoplastic material;
- depositing, on said micro-structured surface, a second transparent thermoplastic material having a refractive index RI_{Lens} higher than a respective refractive index RI_{Wafer} of the first transparent thermoplastic material and a glass transition temperature *Tg_{Lens}* equal to or lower than a respective glass transition temperature *Tg_{Wafer}* of the first transparent thermoplastic material, thus obtaining a support layer which encapsulates the microstructures, the support layer forming, together with said covering layer, said optical article with encapsulated microstructures.

In an embodiment, the microstructures are concave.

In an embodiment, depositing a second transparent thermoplastic material comprises performing an injection overmolding.

In an embodiment, the first transparent thermoplastic material is an imidized acrylic polymer comprising imide units of the structural formula as follows: 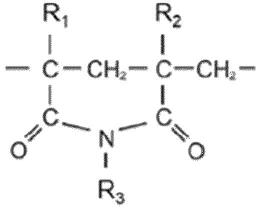 wherein R1, R2, and R3 independently comprise hydrogen or unsubstituted or substituted C1 to C20 alkyl, aryl, or aralkyl alkaryl, or mixtures thereof.

In an embodiment, the imidized acrylic polymer comprises a chained structural formula as follows:

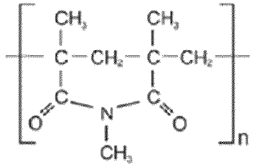

In an embodiment, the imidized acrylic polymer comprises both ester group -O-C(=O)- and amide group -C(=O)-N=.

In an embodiment, the second transparent thermoplastic material comprises polycarbonates, aromatic thermoplastic polyurethanes, aromatic polyamides, polysulfone, polyphenylsulfone, polyetherimide, copolyester, a copolymer thereof, or a derivative or mixture thereof.

In an embodiment, the thickness of the micro-structured covering layer is between 0.25mm and 2.0mm, and preferably between 0.4mm and 1.5mm.

In an embodiment, the thickness of the support layer is comprised in the range between 0.25mm to 15mm and above.

Also provided herein is an optical article with encapsulated microstructures comprising a finished lens, a semi-finished lens, a wafer or a film.

The aforesaid optical article with encapsulated microstructures can be designed to control myopia of an individual.

### Description of the drawings

Further characteristics and advantages of the present invention will become apparent from the following description, provided merely by way of a non-limiting example, with reference to the attached drawings, in which:
Figure 1 depicts a section view of a lens with microstructures;
Figure 2 shows the steps of an injection overmolding process to encapsulate microstructures on a surface of a wafer layer;
Figure 3 shows a section view of two different types of final lens;
Figure 4 shows the step of a method for manufacturing an optical article with encapsulated microstructures according to an example of the present invention;
Figure 5 is a top view picture of the covering layer according to a first example of the invention;
Figure 6 is a top view of the optical article with encapsulated microstructures according to the first example of the invention;
Figure 7 is a bottom view picture of the covering layer according to a second example of the invention; and
Figure 8 is a top view of the optical article with encapsulated microstructures according to the second example of the invention.

### Detailed description of embodiments

In the description which follows, the drawing figures are not necessarily to scale, and certain features may be shown in generalized or schematic form in the interest of clarity and conciseness or for informational purposes. Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process. To avoid unnecessary details for practicing the invention, the description may omit certain information already known to those skilled in the art.

The method for manufacturing an optical article with encapsulated microstructures according to the present invention is based on the exploitation of a novel group of polymers that has a high glass transition temperature Tg and, at the same time, a low refractive index RI, to be used as cover layer (corresponding to the wafer layer TP_{Wafer} above disclosed).

The thermoplastic polymers according to the present invention contain imide units of the structural formula (I) as follows: 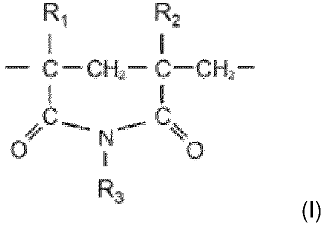 wherein R1, R2, and R3 independently comprise hydrogen or unsubstituted or substituted C1 to C20 alkyl, aryl, or aralkyl alkaryl, or mixtures thereof.

The thermoplastic polymers containing imide units of the above-structural formula can be obtained through imidization of acrylic polymers using well-disclosed methods such as disclosed in document US 2,146,209, DE 1,077,872, DE 1,242,369, US 3,284,425. The imidized acrylic polymers possess the optical properties of an acrylic and the high heat resistance of a polyimide.

Depending on the degree of imidization, the refractive index of said thermoplastic polymers RI can be in a range of 1.50 to 1.55 or higher, and the glass transition temperature Tg is well above 150°C, thus suitable for producing optical articles with encapsulated microstructures for encapsulation by a high index lens layer substrate material using the injection overmolding process shown in Figure 2.

Examples of commercially available thermoplastic polymers containing imide units of the structural formula (I) include Roehm America ACRYMID^{®} TT50 (RI = 1.53 and *Tg* = 151°C) and TT70 (RI = 1.54 and *Tg* = 175°C), which are highly heat distortion-resistant poly(n-methyl methacrylimide) (PMMI) containing the chained structural formula (II) as follows:

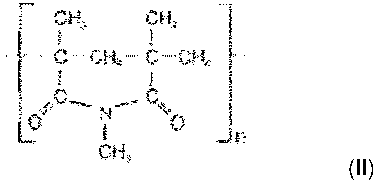

The imidized acrylic polymers contain both ester group -O-C(=O)- and amide group -C(=O)-N=, thus they are compatible with a variety of high index thermoplastics including polycarbonates, aromatic thermoplastic polyurethanes, aromatic polyamides, etc.

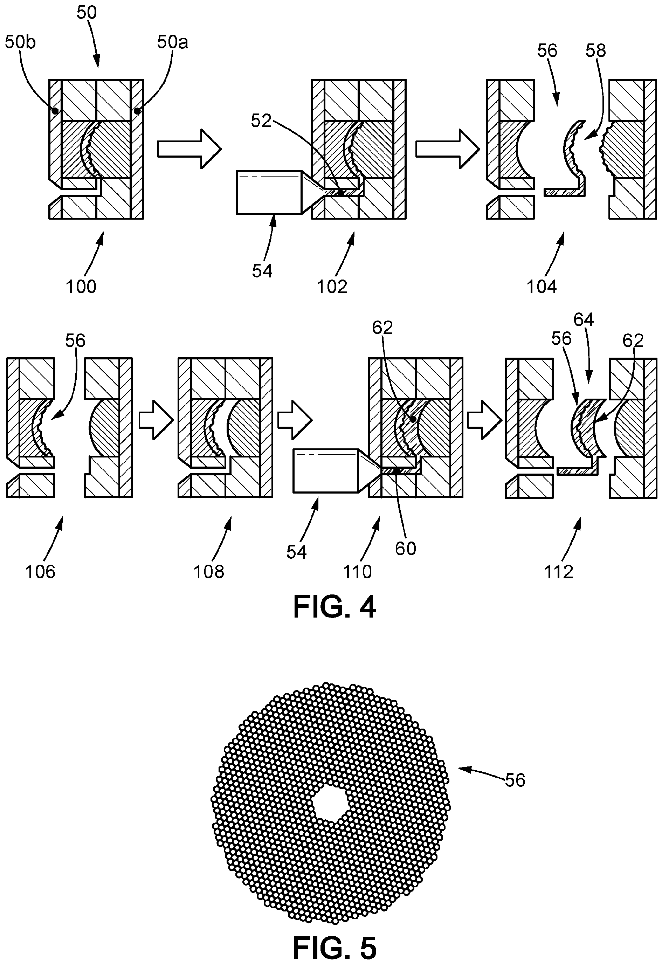

Figure 4 shows the step of a method for manufacturing an optical article with encapsulated microstructures according to an example of the present invention.

In a first step 100, a mold 50 is provided comprising a shaped portion 50a having a micro-structured surface and a smooth portion 50b having a smooth surface. In a next step 102, a first transparent thermoplastic material 52, preferably an imidized acrylic polymer as above disclosed, such as ACRYMID^{®} TT50 or TT70, is inject into the mold 50 through a filler 54. In a next step 104, the mold 50 is opened and a covering layer 56 (corresponding to the wafer layer TP_{Wafer} 10 above disclosed) having microstructures 58 on the concave surface is obtained. Advantageously, the microstructures 58 are concave. The microstructures 58 are created in a manner per se known.

Injection molding of imidized acrylic polymers is very challenging as the materials are not very thermally stable in the melt state. It is therefore necessary to minimize the time of residence of such materials inside the filler 54 and the melting temperature, to avoid degradation that leads to foaming issues.

Advantageously, the cycle time is less or equal to 120 seconds. More preferably the cycle time is less or equal to 75 seconds and even more preferably it is less or equal to 50 seconds. The cycle time is the time necessary to complete both steps 102 and 104 and be ready to repeat the same operations again.

The melting temperature of the imidized acrylic polymer 52 is preferably less or equal to 550°F, more preferably less or equal to 530°F, even more preferably less or equal to 515°F.

Considering a desired final thickness of the resulting optical article to obtain, preferably a lens, preferably for myopia control, the thickness of the micro-structured covering layer 56 should be between 0.25mm and 2.0mm, and preferably between 0.4mm and 1.5mm.

Advantageously, the optical article can be used for other applications than the myopia control.

In a further step 106, the micro-structured covering layer 56 is re-inserted into the mold 50, which is closed in step 108 and then, in step 110, a second transparent thermoplastic material 60, preferably a high index thermoplastic material, is overmold injected through the filler 54 on the concave surface of the micro-structured covering layer 56 to form a support layer 62 (corresponding to the lens layer TP_{Lens} 16 above-disclosed).

The thermoplastic material 60 comprises polycarbonate (PC), aromatic thermoplastic polyurethane, aromatic polyamide, polysulfone, polyphenylsulfone, polyetherimide, a copolymer thereof, or a derivative or mixture thereof.

The refractive index RI_{Wafer} of the imidized acrylic polymer 52 is lower than the refractive index RI_{Lens} of the high index thermoplastic material 60, while the glass temperature *Tg_{Wafer}* of the imidized acrylic polymer 52 is higher than the glass temperature *Tg_{Lens}* of the high index thermoplastic material 60 (*Tg_{Lens}* is equal to or lower than *Tg_{Wafer}*).

Special cares need to be taken when injection overmolding the high index thermoplastic material 60 onto the imidized acrylic polymer covering layer 56 which is relatively brittle and deforms and/or cracks under high shear and high pressure.

The viscosity of the high index thermoplastic material 60 has to be limited during injection to avoid the above-indicated issues. The viscosity can be reduced by raising the melt temperature, however, this would result in deformation of the microstructures 58 around the gate area of the mold 50 due to the high heat. The gate area, per se known, is the entry point of the melt material into the mold 50. The viscosity is related directly to the molecular weight of the high index thermoplastic material 60: a lower the molecular weight is associated to a lower viscosity.

In an embodiment, a high index thermoplastic material 60 having a weight average molecular weight (Mw) no more than 40,000, and preferably, no more than 30,000, is used.

For practical purposes, the thickness of the support layer 62 is comprised in the range between 0.25mm to 15mm and above.

In a final step 112, the mold 50 is opened and a two-layer composite optical article 64 with encapsulated microstructures 58 for myopia control is obtained.

The optical article with encapsulated microstructures 64 can be a lens, either a finished lens or a semi-finished (SF) lens, a wafer or a film.

In a first example according to the present invention, plano PMMI wafers having a diameter of 76mm and a center thickness of 1.1mm with concave bifocal microstructures 58 on the concave surface have been produced in a first step, in a known manner, with a Fanuc α-S110i injection molding machine using a Roehm America ACRYMID^{®} TT70 imidized acrylic polymer having a refractive index of 1.54 and a glass transition temperature *Tg* of about 175°C.

The injection molding parameters have been set to the followings: melt temperature 265°C, mold temperature 125°C, injection speed 100 mm/s, packing pressure 9000 psi and cooling time 20 seconds.

The bifocal microlenses 58 have been arranged in a contiguous configuration as shown in Figure 5, which is a top view picture of the covering layer 56 of the first example.

In a second step, encapsulation of the microlenses 58 obtained in the first step has been performed, in a known manner, with a Krauss Maffei KM150 injection molding machine using a Sabic Lexan^{®} OQ1022 polycarbonate resin having a refractive index of 1.586, a glass transition *Tg* temperature of about 145°C and a molecular weight of about 17,000, thus obtaining a PMMI/PC lens 64, in particular a semi-finished (SF) lens.

The melt and mold temperatures for the injection overmolding process have been set at 245°C and 120°C, respectively. The injection speed was 7 mm/s and the packing pressure was 1,160 psi.

The thickness of the resulting PMMI/PC lens 64 (the optical article with encapsulated microstructures) was 10.0mm with the PC layer being 8.9mm.

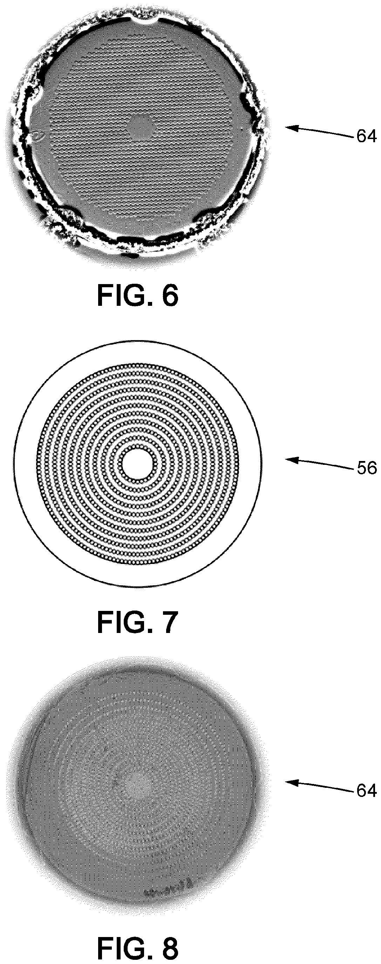

The encapsulated microstructures 58 have been characterized using a known imaging device and Figure 6 shows a top view of the PMMI/PC lens 64 of the first example which has very well-defined boundaries between the microstructures 58, this suggesting that the microlens shape integrity has been preserved. Further, the PMMI/PC lens 64 has been put through Rx surfacing and edging processes without resulting in layer separation, this being an indication of a strong bonding between the PMMI covering layer 56 and the PC support layer 62.

In a second example according to the present invention, a plano PMMA wafer having a diameter of 76mm and a center thickness of 1.1mm with concave microlenses 58 on the concave surface has been produced by with a Nissei FN4000 injection molding machine using Roehm America ACRYLITE^{®} hw55 PMMA copolymer having a refractive index of 1.510 and a glass transition temperature *Tg* of about 120°C. The melt and mold temperatures for the injection process have set at 480°F and 245°F, respectively. The injection speed was 45%, the packing pressure was 48%. The microlenses 58 have been arranged in a concentric ring configuration as shown in Figure 7, which is a bottom view picture of the covering layer 56 of the second example.

In a second step, encapsulation of the microlenses 58 obtained in the first step has been performed, in a known manner, with a Nissei FN4000 injection molding machine using a Lexan^{®} OQ3820 PC, a bisphenol-A polycarbonate having a refractive index of 1.586 and a glass transition temperature *Tg* of about 147°C, thus obtaining a PMMA/PC lens 64.

The melt and mold temperatures for the injection overmolding process have been set at 270°C and 110°C, respectively.

As shown in Figure 8, which is a top view of the PMMA/PC lens 64 of this second example, unlike the PMMI/PC lens 64 of the first example, the image of the lens shows very fuzzy boundaries between the microlenses 58 and the base lens, this suggesting that the microlenses 58 have been deformed and inter-diffusion occurred at the PMMA/PC interface because the heat resistance of the hw55 PMMA is insufficient to withstand the high heat and high pressure of the PC overmolding to maintain the integrity of the microlenses 58. Nevertheless, the PMMA/PC lens 64 has been put through Rx surfacing and edging processes without delamination, this indicating a strong bonding between PMMA and PC owing to a similar ester group in their repeating chemical structure units.

Some of the advantages of present invention include:
- a high index composite optical article with encapsulated microstructures 64, in particular for myopia control, is obtained;
- the solution is applicable for the encapsulation of a variety of microstructures including unifocal and bifocal microlenses, pi-Fresnel microstructures, diffractive micro pillars, etc. in different arrangements such as concentric rings or a contiguous hexagonal array;
- the method could be compatible with existing transitions transbonding process as the microstructures 58 are encapsulated and the outer surfaces of the optical article 64 are smooth.

Clearly, the principle of the invention remaining the same, the embodiments and details of production can be varied considerably from what has been described and illustrated purely by way of non-limiting example, without departing from the scope of protection of the present as defined in the attached claims.

## Claims

1. Method for manufacturing an optical article with encapsulated microstructures (64) comprising the steps of:
- providing a covering layer (56) having microstructures (58) on the concave surface, the covering layer (56) comprising a first transparent thermoplastic material (52);
- depositing, on said micro-structured surface, a second transparent thermoplastic material (60) having a refractive index (RI_{Lens}) higher than a respective refractive index (RI_{Wafer}) of the first transparent thermoplastic material (52) and a glass transition temperature (*Tg_{Lens}*) equal to or lower than a respective glass transition temperature (*Tg_{Wafer}*) of the first transparent thermoplastic material (52), thus obtaining a support layer (62) which encapsulates the microstructures (58), the support layer (62) forming, together with said covering layer (56), said optical article with encapsulated microstructures (64).

2. The method of claim 1, wherein the microstructures (58) are concave.

3. The method of claim 1, wherein depositing a second transparent thermoplastic material (60) comprises performing an injection overmolding.

4. The method of any of the above claims, wherein the first transparent thermoplastic material (52) is an imidized acrylic polymer comprising imide units of the structural formula as follows: 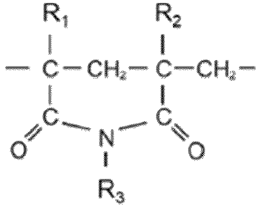 wherein R1, R2, and R3 independently comprise hydrogen or unsubstituted or substituted C1 to C20 alkyl, aryl, or aralkyl alkaryl, or mixtures thereof.

5. The method of claim 4, wherein the imidized acrylic polymer comprises a chained structural formula as follows:

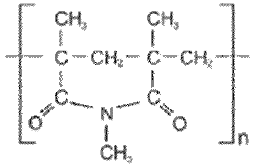

6. The method of claims 4 and 5, wherein the imidized acrylic polymer comprises both ester group -O-C(=O)- and amide group -C(=O)-N=.

7. The method of any of the above claims, wherein the second transparent thermoplastic material (60) comprises polycarbonates, aromatic thermoplastic polyurethanes, aromatic polyamides, polysulfone, polyphenylsulfone, polyetherimide, copolyester, a copolymer thereof, or a derivative or mixture thereof.

8. The method of any of the above claims, wherein the thickness of the micro-structured covering layer (56) is between 0.25mm and 2.0mm, and preferably between 0.4mm and 1.5mm.

9. The method of any of the above claims, wherein the thickness of the support layer (62) is comprised in the range between 0.25mm to 15mm and above.

10. An optical article with encapsulated microstructures manufactured according to a method for manufacturing an optical article with encapsulated microstructures according to any of the claims 1 to 9.

11. The optical article with encapsulated microstructures of claim 10, wherein the optical article with encapsulated microstructures comprises at least one of a finished lens, a semi-finished lens, a wafer or a film.

12. The optical article with encapsulated microstructures claim 11, designed for controlling myopia of an individual.
